(19) **Europäisches Patentamt**
**European Patent Office**
**Office européen des brevets**

(11) **EP 3 764 088 B1**

(12) **EUROPEAN PATENT SPECIFICATION**

(45) Date of publication and mention
of the grant of the patent:
**30.08.2023 Bulletin 2023/35**

(21) Application number: **20183416.5**

(22) Date of filing: **01.07.2020**

(51) International Patent Classification (IPC):
**G01N 23/04** *(2018.01)*

(52) Cooperative Patent Classification (CPC):
**G01N 23/04; G06T 7/0004;** G06T 2207/10116;
G06T 2207/20008

(54) **INSPECTION APPARATUS**

INSPEKTIONSGERÄT

APPAREIL D'INSPECTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.07.2019 JP 2019126313**

(43) Date of publication of application:
**13.01.2021 Bulletin 2021/02**

(73) Proprietor: **Ishida Co., Ltd.**
**Kyoto-shi, Kyoto 606-8392 (JP)**

(72) Inventors:
• **IWAI, Atsushi**
**Ritto-shi, Shiga 520-3026 (JP)**

• **YURUGI, Futoshi**
**Ritto-shi, Shiga 520-3026 (JP)**
• **TOMINAGA, Kota**
**Ritto-shi, Shiga 520-3026 (JP)**
• **MAKI, Hiroaki**
**Ritto-shi, Shiga 520-3026 (JP)**

(74) Representative: **Global IP Europe**
**Patentanwaltskanzlei**
**Pfarrstraße 14**
**80538 München (DE)**

(56) References cited:
**WO-A1-2017/014194    US-A1- 2007 019 841**
**US-B2- 9 183 450**

**Description**

TECHNICAL FIELD

One aspect of the present disclosure relates to an inspection apparatus.

BACKGROUND

Known in the art is an inspection apparatus that generates a processed image by performing image processing using an image processing algorithm on a transmission image obtained by transmitting electromagnetic waves through an article and performs an inspection of the article based on the processed image. In such an inspection apparatus, a plurality of image processing algorithms are stored in a storage unit in advance, and out of the stored image processing algorithms, an optimal image processing algorithm used for image processing at the time of inspection is selected and set.
For example, Japanese Patent No. 5635903 discloses an inspection apparatus (X-ray inspection apparatus) that, when an operator selects a foreign-matter detection characteristic of a foreign matter to be detected from an article to be inspected, extracts multiple image processing algorithms that approximate the selected foreign-matter detection characteristic from a plurality of image processing algorithms stored in advance and displays them on a display unit. US 2007/0019841 A1 discloses an X-ray inspection apparatus which performs a process for selecting the most adaptable algorithm. The process is repeated until predetermined termination conditions are satisfied. The most adaptable procedure at the termination point is selected.

SUMMARY

However, in the above-described conventional inspection apparatus, a plurality of image processing algorithms extracted according to the foreign-matter detection characteristic are displayed on the display unit, but it is the operator who determines which of the relevant extracted image processing algorithms is ultimately used for the image processing. Thus, the selection of the image processing algorithm may take time or labor, and the optimal image processing algorithm may not be selected during the process of the above-described selection. For this reason, there is room for improvement in selecting the optimal image processing algorithm.
Thus, an object of one aspect of the present disclosure is to provide an inspection apparatus defined in the appended claim 1. The more advantageous effects can be achieved by the appended dependent claims.
An inspection apparatus according to one aspect of the present disclosure is an inspection apparatus that is configured to perform image processing using an image processing algorithm selected in advance out of a plurality of image processing algorithms on a transmission image obtained by transmitting electromagnetic waves through an article, and is configured to inspect presence of a foreign matter contained in the article based on an image processing result, the inspection apparatus comprising:

> a storage unit configured to store the image processing algorithms,
> the image processing algorithms being algorithms for which a plurality of image processing filters are combined;
> an acquisition unit configured to acquire, as a reference transmission image,

>> a transmission image (P11) obtained by transmitting electromagnetic waves through the article containing the foreign matter, or
>> a synthesized transmission image (P13) generated by virtually synthesizing, on a conforming-article transmission image (PA1), a foreign-matter transmission image (PF, PF1) that is obtained by transmitting X-rays through the foreign matter,
>> the conforming-article transmission image (PA1) being an X-ray transmission image of the article containing no foreign matter;

> an evaluation unit configured to evaluate detection accuracy of the foreign matter for each of the image processing algorithms based on evaluation images obtained by processing the reference transmission image with the image processing algorithms stored in the storage unit; and
> a setting unit configured to set at least one of the image processing algorithms as the image processing algorithm selected in advance based on evaluation in the evaluation unit.

The foreign matter contained in the reference transmission image acquired by the acquisition unit includes a test piece (specimen) corresponding to the foreign matter. In the inspection apparatus of this configuration, on the basis of the evaluation images obtained by processing the reference transmission image by the respective image processing algorithms stored in the storage unit, the detection accuracy of the foreign matter for each of the image processing algorithms is evaluated, thereby enabling the image processing algorithms to be objectively evaluated. Then, out of the objectively evaluated image processing algorithms, at least one image processing algorithm is automatically set as the image processing algorithm selected in advance in image processing at the time of inspection. As a result, the optimal image processing algorithm out of the image processing algorithms stored in advance can be set without human intervention.

In the inspection apparatus according to one aspect of the present disclosure, the acquisition unit is configured to acquire the synthesized transmission image as a reference transmission image; and the synthesized transmission image may be generated by synthesizing a transmission image obtained by transmitting electromagnetic waves through the foreign matter with at least a part of a transmission image obtained by transmitting electromagnetic waves through the article. As a result, the transmission image of the article to which the foreign matter is attached can be easily acquired.

In the inspection apparatus according to one aspect of the present disclosure, the evaluation unit is preferably configured to evaluate the detection accuracy based on a score calculated based on average brightness of a portion corresponding to the foreign matter of the evaluation image, minimum brightness of a portion corresponding to the foreign matter, and maximum brightness of a portion corresponding to the article other than the foreign matter. This allows the detection accuracy of the foreign matter to be determined more accurately.

In the inspection apparatus according to one aspect of the present disclosure, the evaluation unit is preferably configured to evaluate the detection accuracy based on a score calculated based on a calculation formula in which the score is set to become higher as a portion corresponding to the foreign matter of the evaluation image becomes brighter and as a portion corresponding to the article other than the foreign matter becomes darker in a case where the evaluation image is obtained so as to be indicated darker as a transmission amount of the electromagnetic waves increases and indicated brighter as a transmission amount of the electromagnetic waves declines as a result of processing the reference transmission image with the image processing algorithm. Accordingly, the respective evaluation for the image processing algorithms is explicitly indicated, and thus the image processing algorithm evaluated by the evaluation unit can be reliably set as the image processing algorithm selected in advance.

In the inspection apparatus according to one aspect of the present disclosure, the acquisition unit is preferably configured to generate, based on a transmission image acquired by transmitting electromagnetic waves through the foreign matter that is transported in a state in which it is mounted on a belt conveyor, a foreign-matter transmission image so as to be indicated darker as a transmission amount of electromagnetic waves increases and indicated brighter as a transmission amount of electromagnetic waves declines and for which a portion corresponding to the foreign matter and a portion corresponding to a background of a periphery of the foreign matter are extracted from the transmission image, generate a virtual foreign matter image for which brightness of a portion corresponding to the background is set to zero by subtracting a mode value of brightness in the foreign-matter transmission image from brightness of each pixel constituting the foreign-matter transmission image, and generate the synthesized transmission image by synthesizing the virtual foreign-matter image with the conforming-article transmission image obtained by transmitting electromagnetic waves through the article. Accordingly, the synthesized transmission image used in evaluating the detection accuracy of the foreign matter with respect to the image processing algorithm can be easily generated and the reference transmission image appropriate as an image in evaluating the image processing algorithm can be acquired.

In the inspection apparatus according to one aspect of the present disclosure, the acquisition unit is preferably configured to acquire a first variation that is variation in brightness of a portion corresponding to the foreign matter with respect to a portion corresponding to the background in the foreign-matter transmission image, and a second variation that is variation in brightness of a portion corresponding to the foreign matter with respect to a portion corresponding to the article other than the foreign matter in the transmission image obtained by transmitting electromagnetic waves through the article containing the foreign matter, and the acquisition unit is preferably configured to correct, based on the first variation and the second variation, brightness of respective pixels constituting the synthesized transmission image, wherein the acquisition unit is configured to correct the brightness of the synthesized transmission image (P13) based on the following formula:

(Brightness of the synthesized transmission image (P13))

= (Brightness of conforming-article transmission image (PA1))

- (Adjustment coefficient) * (Brightness variation in the transmission image (P11))

(Brightness variation in the transmission image (P11))

= (Brightness variation in the foreign matter image (PF1)) * (Brightness of the article) /

(Brightness of background).

Accordingly, the synthesized transmission image that is closer to reality can be acquired, and thus the evaluation accuracy by the evaluation unit can be enhanced.

According to one aspect of the present disclosure, it is possible to set the optimal image processing algorithm out of multiple image processing algorithms stored in advance without human intervention.

BRIEF DESCRIPTION OF THE DRAWINGS

FIG. 1 is a configuration diagram of an X-ray inspection apparatus according to one embodiment.
FIG. 2 is a configuration diagram of the inside of a shield box illustrated in FIG. 1.
FIG. 3 is a functional block diagram illustrating a functional configuration of the X-ray inspection apparatus in the embodiment.
FIG. 4 is an explanatory diagram illustrating a sequence of image processing of the X-ray inspection apparatus in the embodiment.
FIG. 5A is one example of a transmission image of a plurality of foreign matters transported by a conveyor belt, FIG. 5B is one example of a foreign-matter transmission image, and FIG. 5C is one example of an image for which the light and shade of the foreign-matter transmission image was reversed.
FIG. 6A is one example of a foreign-matter area image.
FIG. 6B is one example of a virtual foreign matter image.
FIG. 7A is one example of a transmission image.
FIG. 7B is one example of an evaluation image for which a foreign matter was properly detected by image processing of an image processing algorithm.
FIG. 7C is one example of an evaluation image for which a foreign matter was not properly detected by image processing of an image processing algorithm.

DETAILED DESCRIPTION

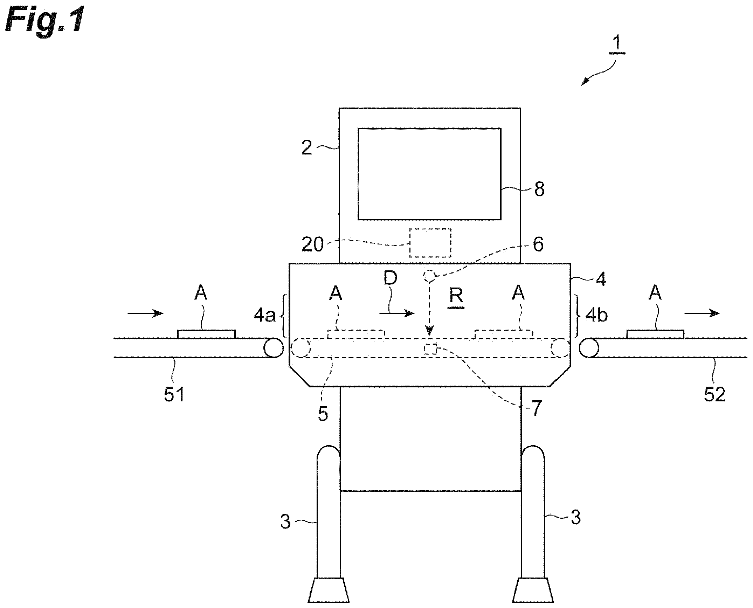

As illustrated in FIG. 1, an X-ray inspection apparatus (inspection apparatus) 1 includes an apparatus body 2, support legs 3, a shield box 4, a transport unit 5, an X-ray irradiation unit 6, an X-ray detector 7, a display operating unit 8, and a controller 20.

The X-ray inspection apparatus 1 generates X-ray transmission images of articles A by irradiating the articles A with X-rays (electromagnetic waves) while transporting the articles A and performs the inspection (for example, storage number inspection, foreign-matter mixing inspection, missing-part inspection, and crack inspection) of the articles A based on the relevant X-ray transmission images. The articles A before inspection are brought into the X-ray inspection apparatus 1 by an infeed conveyor 51. The articles A after inspection are taken out from the X-ray inspection apparatus 1 by an outfeed conveyor 52. The articles A determined to be defective by the X-ray inspection apparatus 1 are distributed off the production line by a sorting device (depiction omitted) disposed downstream of the outfeed conveyor 52. The articles A determined to be good by the X-ray inspection apparatus 1 pass through the relevant sorting device as is.

The apparatus body 2 accommodates the controller 20 and others. The support legs 3 support the apparatus body 2. The shield box 4 is provided on the apparatus body 2. The shield box 4 prevents external leakage of X-rays. Inside the shield box 4, provided is an inspection area R where inspection of the articles A by X-rays is performed. In the shield box 4, an infeed opening 4a and an outfeed opening 4b are formed. The articles A before inspection are brought into the inspection area R via the infeed opening 4a from the infeed conveyor 51. The articles A after inspection are taken out to the outfeed conveyor 52 via the outfeed opening 4b from the inspection area R. On each of the infeed opening 4a and the outfeed opening 4b, an X-ray shielding curtain (depiction omitted) that prevents X-ray leakage is provided.

The transport unit 5 is disposed inside the shield box 4. The transport unit 5 transports the articles A along the transport direction D from the infeed opening 4a to the outfeed opening 4b through the inspection area R. The transport unit 5 is a belt conveyor bridged between the infeed opening 4a and the outfeed opening 4b, for example.

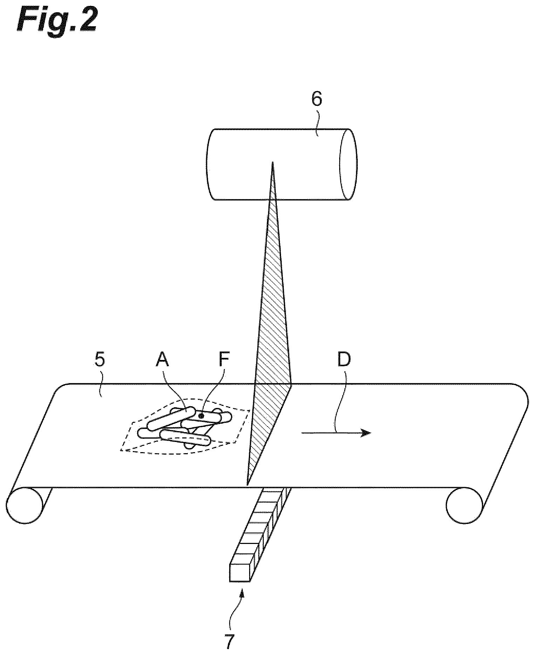

As illustrated in FIG. 1 and FIG. 2, the X-ray irradiation unit 6 is disposed inside the shield box 4. The X-ray irradiation unit 6 irradiates the article A transported by the transport unit 5 with X-rays. The X-ray irradiation unit 6 includes an X-ray tube that emits X-rays and a collimator that expands the X-rays emitted from the X-ray tube in a fan shape within a plane perpendicular to the transport direction D, for example.

The X-ray detector 7 is disposed inside the shield box 4. The X-ray detector 7 detects the X-rays that are emitted from the X-ray irradiation unit 6 toward the article A transported by the transport unit 5 and are transmitted through the article A. The X-ray detector 7 is a line sensor composed of X-ray detecting elements arrayed in one dimension along the horizontal direction perpendicular to the transport direction D.

As illustrated in FIG. 1, the display operating unit 8 is provided on the apparatus body 2. The display operating unit 8 displays various information and receives input of various conditions. The display operating unit 8 is a liquid crystal display and displays an operation screen as a touch panel, for example. In this case, an operator can input various conditions via the display operating unit 8.

The controller 20 is disposed inside the apparatus body 2. The controller 20 controls the operation of various units of the X-ray inspection apparatus 1. The controller 20 is made up of a central processing unit (CPU), a read-only memory (ROM), a random-access memory (RAM), a solid-state drive (SSD), and the like. In the ROM, a program for controlling the X-ray inspection apparatus 1 is recorded. To the I/O port and communication port, the transport unit 5, the X-ray irradiation unit 6, the X-ray detector 7, and the display operating unit 8 are connected. As a result, the controller 20 can control the various operations of the X-ray inspection apparatus 1.

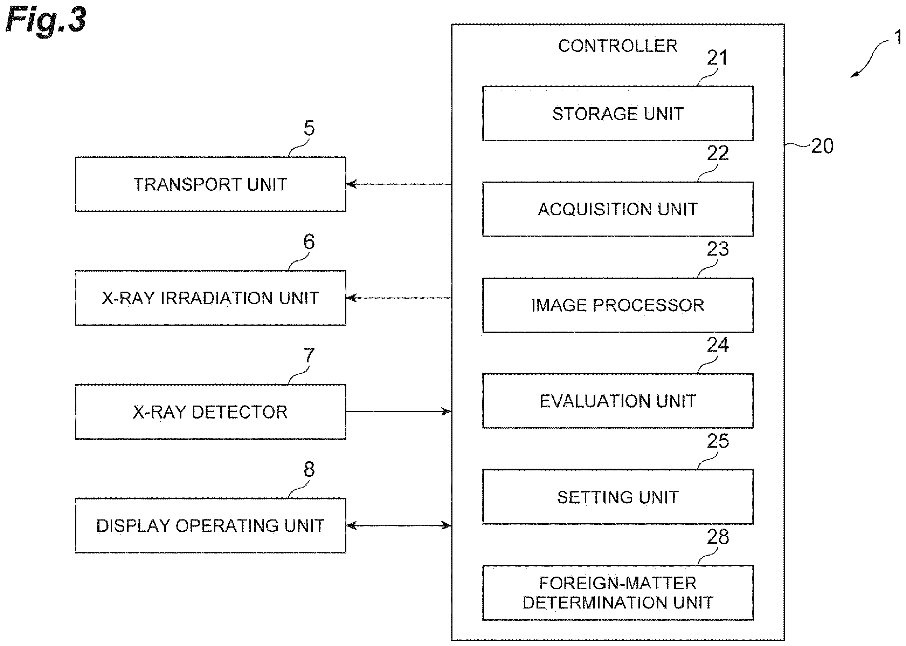

The controller 20, as illustrated in FIG. 3, includes a storage unit 21, and an acquisition unit 22, an image processor 23, an evaluation unit 24, a setting unit 25, and a foreign-matter determination unit 28, which are configured by reading in predetermined computer software on hardware such as the CPU, the RAM, and the like and being executed under the control of the CPU.

The storage unit 21 stores therein a plurality of image processing algorithms. The image processing algorithms stored in the storage unit 21 can be acquired from outside via a network such as the Internet. In addition, the image processing algorithms stored in the storage unit 21 can be acquired from an external storage medium such as a USB memory, a CF card, or a removable hard disk.

The image processing algorithms stored in the storage unit 21 can be generated automatically from a plurality of image processing filters, by employing genetic algorithms (GA) that are methods of applying genetic and evolutionary mechanisms in the living world, based on the specification of the X-ray inspection apparatus 1, inspection conditions, or the like. The image processing algorithms stored in the storage unit 21 in advance may be, in addition to the algorithms generated by employing the genetic algorithms, algorithms for which a plurality of image processing filters are manually combined as appropriate or the like.

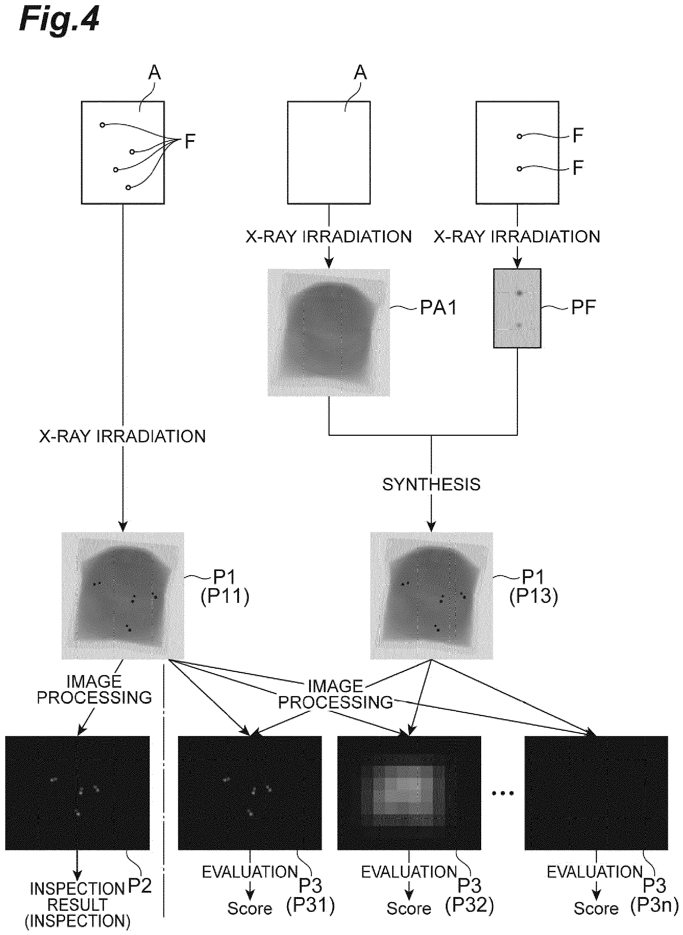

The acquisition unit 22 acquires a transmission image P11 (see FIG. 4) that is obtained by transmitting X-rays through the article A (see FIG. 4) that may contain a foreign matter F. The image processor 23 performs, on the transmission image P11, image processing using an image processing algorithm that is preset by the setting unit 25 which will be described in detail in a subsequent stage and generates a processed image P2 that is a grayscale image expressed in multi-tone. The image processor 23 displays the generated relevant processed image P2 on the display operating unit 8.

The foreign-matter determination unit 28 performs inspection of the article A based on the processed image P2 that has been image-processed by the image processor 23. Specifically, the foreign-matter determination unit 28 determines the presence of the foreign matter F (determination of quality) based on variations in brightness (for example, presence of an abrupt brightness change portion) when the processed image P2 is scanned in one direction. The foreign-matter determination unit 28 may explicitly display the inspection result, on the display operating unit 8 on which the processed image is displayed, by surrounding the periphery of the foreign matter F by a frame or inserting characters, for example. Note that the brightness in the present specification means the brightness of each pixel constituting an image and is indicated by a gray value, density value, lightness value, luminance value, and the like.

In order to perform an inspection of the foreign matter F in such an X-ray inspection apparatus 1, there is a need to select in advance an image processing algorithm for generating the processed image P2 out of a plurality of image processing algorithms stored in the storage unit 21 and set it as the image processing algorithm used for the inspection. Then, in order to enhance the detection accuracy of the foreign matter F, there is a need to select and set an optimal image processing algorithm for generating the processed image P2 in advance. Thus, the X-ray inspection apparatus 1 is provided with an initial setting function that selects and sets the image processing algorithm used for inspection out of the image processing algorithms.

A conventional X-ray inspection apparatus has had an initial setting function that presents to the operator respective evaluation images P3 (see FIG. 4) for which various image processing algorithms were performed on the transmission image P11, and that enables the operator to set, as the image processing algorithm selected in advance, the image processing algorithm that generated the evaluation image P3 that the operator subjectively feels optimum. The present embodiment has an initial setting function that can select and set in advance an optimal image processing algorithm out of a plurality of image processing algorithms automatically without using the intervention of the operator. Such an initial setting function is mainly configured by the acquisition unit 22, the image processor 23, the evaluation unit 24, and the setting unit 25. The following describes the initial setting function of the present embodiment.

First, an acquisition function of a reference transmission image P1 that is an image to be processed by each image processing algorithm will be described. The acquisition unit 22, as illustrated in FIG. 4, acquires the transmission image P11 that is obtained by transmitting X-rays through the article A containing the foreign matters F, or a synthesized transmission image P13 that is generated by synthesizing a foreign-matter transmission image PF that is obtained by transmitting X-rays through the foreign matters F on a conforming-article transmission image PA1 that is obtained by transmitting X-rays through the article A, as the reference transmission image P1.

The acquisition unit 22 irradiates an article A with the X-rays, the article A containing foreign matters F (article A for which the foreign matters F or test pieces were attached to a conforming article containing no foreign matters F) transported by the belt conveyor as the transport unit 5, and acquires the transmission image P11 by detecting the X-rays that were transmitted through the article A. The acquisition unit 22 of the present embodiment acquires the transmission image P11 that appears brighter as the amount of X-ray transmission is greater and that appears darker as the amount of X-ray transmission is smaller.

The acquisition unit 22 irradiates an article A with the X-rays, the article A containing no foreign matters F (conforming article A) transported by the belt conveyor as the transport unit 5, and acquires the conforming-article transmission image PA1 by detecting the X-rays that were transmitted through the conforming article A. The acquisition unit 22 of the present embodiment acquires the conforming-article transmission image PA1 that appears brighter as the amount of X-ray transmission is greater and that appears darker as the amount of X-ray transmission is smaller.

The acquisition unit 22 irradiates foreign matters F with the X-rays, the foreign matters F being transported by the belt conveyor as the transport unit 5, and acquires the foreign-matter transmission image PF by detecting the X-rays that were transmitted through the foreign matters F. The acquisition unit 22 of the present embodiment acquires the foreign-matter transmission image PF that appears brighter as the amount of X-ray transmission is greater and that appears darker as the amount of X-ray transmission is smaller. The acquisition unit 22 acquires the synthesized transmission image P13 by synthesizing the foreign-matter transmission image PF on the conforming-article transmission image PA1 obtained in this way. The acquisition unit 22 acquires the synthesized transmission image P13 that appears brighter as the amount of X-ray transmission is greater and that appears darker as the amount of X-ray transmission is smaller.

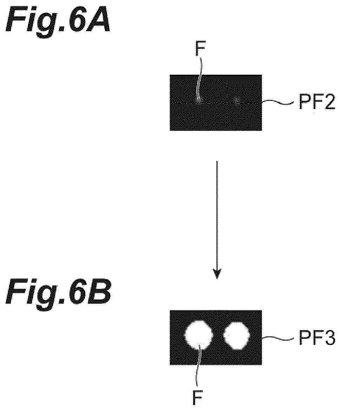

The conforming-article transmission image PA1 is an X-ray transmission image of an inspection target article containing no foreign matters F. The synthesized transmission image P13 formed by synthesizing a virtual foreign matter image PF3 (see FIG. 6A and FIG. 6B) generated based on the foreign-matter transmission image PF on this conforming-article transmission image PA1 is the reference transmission image P1 to be the reference for evaluating the optimal image processing algorithm used in foreign matter inspection of articles of the same type. That is, in the virtual foreign matter image PF3, the sizes and locations of the virtual foreign matters in the conforming-article transmission image PA1 are known in advance. Because image processing by each image processing algorithm can be performed in a state where the locations and sizes of the virtual foreign matter images that are synthesized to the conforming-article transmission image PA1 are known, the time and labor of the setting (labeling) work of the location (pixels) where the foreign matter F is located and the like can be saved, and each image processing algorithm can be evaluated by whether the foreign matter can be properly detected from the image processing result of each image processing algorithm.

On the synthesized transmission image P13 by the acquisition unit 22, the function of generating the synthesized transmission image P13 by using the virtual foreign matter image PF3 will be described in more detail. The X-ray inspection apparatus 1 of the present embodiment has a function capable of storing (registering) the virtual foreign matter image PF3 (see FIG. 6A and FIG. 6B) that is the transmission image for each type of the foreign matter F. In the X-ray inspection apparatus 1 having such a function, if the conforming-article transmission image PA1 is acquired, the reference transmission image P1 can be generated by using the virtual foreign matter image PF3 registered in advance. That is, the time and labor of transporting on the belt conveyor a sample in a state where the foreign matters F (or test pieces) are placed on the conforming article A and acquiring the reference transmission image P1 can be omitted. The following describes the function of generating the virtual foreign matter image PF3.

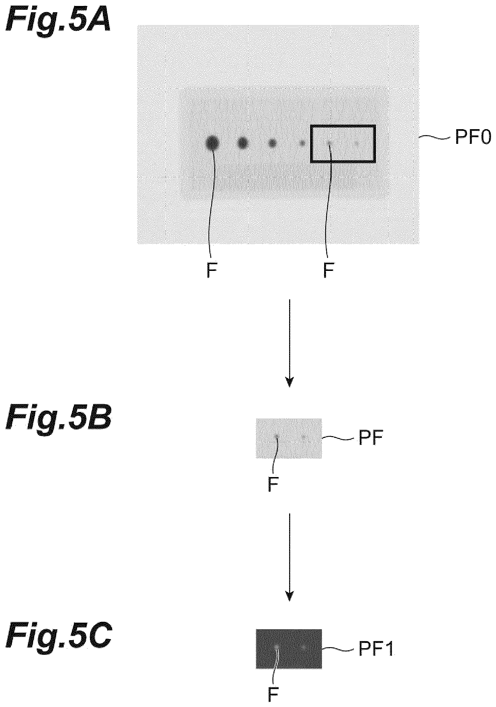

As illustrated in FIG. 5A, the acquisition unit 22 acquires a transmission image PF0 of a plurality of foreign matters F. Specifically, a plurality of foreign matters F are lined up, by the operator, on the belt conveyor as the transport unit 5 and a transmission image by the X-ray inspection apparatus 1 is acquired. FIG. 5A illustrates the foreign matters F of the same type and of the sizes different from one another. The acquisition unit 22, when a portion (area) (for example, frame portion in FIG. 5A) containing foreign matters F to be registered as the foreign matter F is selected by the operator in an appropriate manner, for example, extracts the relevant portion and generates the foreign-matter transmission image PF illustrated in FIG. 5B. The acquisition unit 22 acquires a foreign-matter transmission image PF1 illustrated in FIG. 5C for which the light and shade of the foreign-matter transmission image PF was reversed.

In this case, the acquisition unit 22 generates a brightness histogram of the foreign-matter transmission image PF1 and acquires a mode value of brightness. The acquisition unit 22 determines that the relevant mode value is a background portion that is a portion other than the foreign matter F in the foreign-matter transmission image PF1. The acquisition unit 22 subtracts, on the entire foreign-matter transmission image PF1, the brightness to be the above-described mode value, and acquires a foreign-matter area image PF2 illustrated in FIG. 6A for which the brightness of the portion other than the foreign matter F is set to zero. That is, the foreign-matter area image PF2 is an image for which the area corresponding to the foreign matter F appears brighter relative to the periphery, with the portion where the brightness is to be zero (portion indicated in black) as the background. The acquisition unit 22, as illustrated in FIG. 6B, generates the virtual foreign matter image PF3 for which the area corresponding to the foreign matter F of the foreign-matter area image PF2 has been expanded.

The acquisition unit 22 generates the synthesized transmission image P13 by synthesizing the virtual foreign matter image PF3 on the above-described conforming-article transmission image PA1. At this time, the acquisition unit 22 acquires a first variation that is the variation in brightness of the portion corresponding to the foreign matter F with respect to the portion (area) corresponding to the background in the foreign-matter transmission image PF1, and a second variation that is the variation in brightness of the portion corresponding to the foreign matter F with respect to the portion corresponding to the article A in the transmission image P11 obtained by transmitting X-rays through the article A containing the foreign matter F. The acquisition unit 22 corrects, based on the above-described first variation and the second variation, the brightness of the respective pixels constituting the synthesized transmission image P13.

In more detail, based on the brightness of the synthesized image calculated by the following calculation formula, the brightness of the respective pixels constituting the synthesized transmission image P13 is corrected.

$$\text{Brightness variation in transmission image P11}$$
$$= \frac{\text{Brightness variation in attention foreign matter image PF1} \times \text{Brightness of article A}}{\text{Brightness of background (belt conveyor)}}$$

$$\text{Brightness of synthesized transmission image P13}$$
$$= \text{Brightness of conforming-article transmission image PA1}$$
$$-(\text{Adjustment coefficient} \times \text{Brightness variation in transmission image P11})$$
$$= \text{Brightness of conforming-article transmission image PA1}$$
$$-(\text{Adjustment coefficient}$$
$$\times \frac{\text{Brightness variation in attention foreign matter image PF1} \times \text{Brightness of article A}}{\text{Brightness of background (belt conveyor)}})$$

Note that the adjustment coefficient indicates weight at the time of synthesizing.

In the X-ray inspection apparatus 1 of the present embodiment, by such correction of the synthesized image by the acquisition unit 22, the synthesized transmission image P13 that is closer to reality can be acquired. In FIG. 4, the synthesized transmission image P13 that appears darker as the amount of X-ray transmission is smaller has been exemplified but is not limited thereto, and the light and shade may be reversed. Similarly, in the transmission image P11 also, the light and shade may be reversed.

Next, the function to evaluate each image processing algorithm will be described. The image processor 23 generates an evaluation image P3 on which the evaluation of the image processing algorithm is performed by the evaluation unit 24. Specifically, the image processor 23 performs, for each of the image processing algorithms stored in the storage unit 21, a process of generating the evaluation images P3 by performing image processing using the image processing algorithms stored in the storage unit 21 on the reference transmission image P1 acquired by the acquisition unit 22. That is, as illustrated in FIG. 4, the image processor 23 generates a plurality of evaluation images P31, P32, ..., P3n for which image processing by each of the image processing algorithms is performed on the reference transmission image P1 (transmission image P11 or synthesized transmission image P13).

The image processor 23 may generate the above-described evaluation images P3 for all the image processing algorithms (for example, 200 or more) stored in the storage unit 21, or may generate the evaluation images P3 for a part of the image processing algorithms (for example, approximately 5 to 10) automatically selected by using various selecting methods.

The evaluation unit 24 evaluates, based on the evaluation images P3 generated by the image processor 23, the detection accuracy of the foreign matter for the respective image processing algorithms. The evaluation unit 24 evaluates the detection accuracy of the foreign matter F on the basis of a score that is calculated based on the average brightness of the portion corresponding to the foreign matter F of the evaluation image P3, the minimum brightness of the portion corresponding to the foreign matter F, and the maximum brightness of the portion corresponding to the article A other than the foreign matter F.

In detail, the evaluation unit 24 evaluates the detection accuracy on the basis of the score that is calculated based on a calculation formula for which the score gets higher when the portion (pixels) corresponding to the foreign matter F of the evaluation image P3 is brighter and when the portion (pixels) corresponding to the article A other than the foreign matter F is darker. In more detail, the evaluation unit 24 evaluates the detection accuracy of the foreign matter based on the score obtained by the following calculation expression 1. In the present embodiment, the evaluation unit 24 determines that the image processing algorithm that generated the evaluation image P3 of the maximum score is the optimal algorithm.

$$Score = \frac{AveMinRate \times (AveSub + MinSub + AveRate + MinRate)}{4} \quad \cdots(1)$$

AveMinRate: Level uniformity (between 0 and 1.00)

$$\text{Level uniformity}$$
$$= \frac{(\text{ Minimum brightness of foreign matter F portion}) \times 4}{(\text{ Average brightness of foreign matter F portion}) \times 5}$$
$$+ \frac{(\text{ Average brightness of foreign matter F portion})}{(\text{ Average brightness of foreign matter F portion}) \times 5}$$

When the average brightness of the foreign matter F portion is zero, it is set to AveMinRate=0.

AveSub: Average level difference (between 0 and 100)
Average level difference=(Average brightness of foreign matter F portion)-(Maximum brightness of other than foreign matter F portion)
MinSub: Minimum level difference (between 0 and 100)
Minimum level difference=((Minimum brightness of foreign matter F portion)-(Maximum brightness of other than foreign matter F portion))×2
AveRate: Average contrast (between 0 and 100)

$$\text{Average contrast}$$
$$= \frac{\text{Average brightness of foreign matter F portion}}{\text{Maximum brightness of portion other than foreign matter F}} \times 5$$

MinRate: Minimum contrast (between 0 and 100)

$$\text{Minimum contrast}$$
$$= \frac{\text{Minimum brightness of foreign matter F portion}}{\text{Maximum brightness of portion other than foreign matter F}} \times 10$$

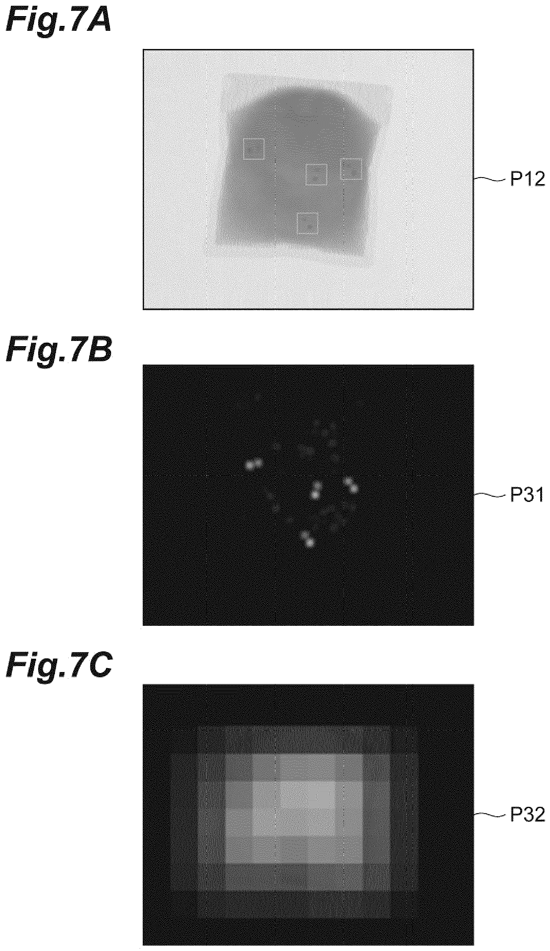

It will be described that, according to the above-described calculation expression 1, the image processing algorithm can be evaluated correctly, as indicated in the following. First, the transmission image P11 (see FIG. 7A) of a sample containing the foreign matters F at four places was acquired as the reference transmission image P1, and by performing a first image processing algorithm and a second image processing algorithm different from the first image processing algorithm on the relevant reference transmission image P1, an evaluation image P31 and an evaluation image P32 were generated. It can be seen that the evaluation image P31 is an image for which the foreign matters F were successfully detected by the image processing by the image processing algorithm and that the evaluation image P32 is the image for which the foreign matters F were not properly detected by the image processing by the image processing algorithm.

When the score was calculated based on the above-described calculation expression 1 on each of such evaluation image P31 and evaluation image P32, the results indicated in the following Table 1 were obtained. That is, according to the above-described calculation expression 1, it can be seen that the score of the image for which the foreign matters F were successfully detected becomes greater than the score of the image for which the foreign matters F were not properly detected.

Table 1

|  | First image processing algorithm | Second image processing algorithm |
|---|---|---|
| Score | 68.2 | 0 |
| Average brightness of foreign matter F portion | 130 | 135 |
| Minimum brightness of foreign matter F portion | 115 | 122 |
| Maximum brightness of other than foreign matter F portion | 16 | 158 |
| Average level difference | 100 | 0 |
| Minimum level difference | 100 | 0 |
| Average contrast | 40 | 0 |
| Minimum contrast | 70 | 0 |
| Level uniformity | 0.91 | 0.92 |

The setting unit 25 sets (determines) one selected by the evaluation unit 24 out of the image processing algorithms stored in the storage unit 21 as the image processing algorithm to be used in inspection. The setting unit 25 of the present embodiment sets, as the image processing algorithm used in inspection, the image processing algorithm for which the score calculated by the evaluation unit 24 is the highest. The setting unit 25 sets, for each of the articles A of a plurality of types (for example, 200 to 300 types), the image processing algorithm evaluated optimum by the evaluation unit 24 for each of a plurality of sensitivity levels.

Next, in the X-ray inspection apparatus 1 thus configured, on the article A, the procedure of setting (initial setting) the optimal image processing algorithm for each type of the foreign matter F and for each sensitivity level will be described. In this case, the procedure of using the synthesized transmission image P13 as the reference transmission image P1 will be described.

The operator sets, in a sensitivity auto-set menu screen that is an initial setting screen, the type of foreign matter F to be extracted at the sensitivity level 4 to 7, for example. Then, after determining the setting of X-ray output level and image enhancement level by sensitivity auto-set, the operator runs, through the transport unit 5, a conforming article A that is the article A that has a possibility of containing foreign matters F but contains no foreign matters F so that the conforming-article transmission image PA1 is acquired. The operator repeats the relevant work so that 10 pieces of the conforming-article transmission images PA1 are acquired.

Then, the operator selects, for the conforming-article transmission image PA1, the virtual foreign matter image PF3 corresponding to the foreign matter F to be extracted at the time of sensitivity level 4. The X-ray inspection apparatus 1 synthesizes the virtual foreign matter image PF3 selected by the operator on each of the 10 pieces of the conforming-article transmission images PA1 and generates 10 pieces of the synthesized transmission images P13. In the X-ray inspection apparatus 1, when 10 pieces of the synthesized transmission images P13 are generated, automatically or by the operation of the operator, image processing by a plurality of image processing algorithms for the 10 pieces of the synthesized transmission images P13 is started. The image processing algorithms are, as in the foregoing, stored in the storage unit 21 (including an external storage medium).

In the X-ray inspection apparatus 1, when the respective evaluation images P3 processed by the image processing algorithms are generated, the score for evaluating the detection accuracy of the foreign matter F is calculated on each of the evaluation images P3. The X-ray inspection apparatus 1 selects the image processing algorithm of the highest score and automatically sets it as the image processing algorithm used in the inspection. In this case, on an article A, the image processing algorithm that is optimum for the sensitivity level 4 of a foreign matter F is set. The operator repeats similar procedures on the sensitivity levels 5 to 7.

When the inspection of the articles A is performed in the X-ray inspection apparatus 1 for which such an initial setting was performed, as long as the operator selects at least the type of the articles A, the image processing of the transmission image P11 is performed using the image processing algorithm selected in advance out of the image processing algorithms and the inspection of the articles A is performed.

As in the foregoing, in the X-ray inspection apparatus 1 according to the present embodiment, on the basis of the evaluation images P3 obtained by processing the reference transmission image P1 by a plurality of image processing algorithms stored in the storage unit 21, the detection accuracy of the foreign matter F for the respective image processing algorithms is evaluated, thereby enabling the image processing algorithms to be objectively evaluated. Then, out of the objectively evaluated image processing algorithms, it is automatically set as the image processing algorithm selected in advance in image processing at the time of inspection. As a result, the optimal image processing algorithm out of the image processing algorithms stored in advance can be set without going through human intervention.

As in the foregoing, the embodiment according to one aspect of the present disclosure has been described.

In the above-described embodiment, the X-ray detector 7 composed of a single line sensor has been exemplified but may have two pieces of line sensors of a first line sensor and a second line sensor. In this case, it may be what is called a dual-energy sensor for which the first line sensor detects X-rays of low energy band and the second line sensor detects X-rays of higher energy band than the low energy band. In this case also, on the transmission images generated by the detection of the first line sensor and the second line sensor, respective appropriate image processing algorithms are performed. As a result, in the initial setting also, on the article A, the image processing algorithm that is optimum for each of the first line sensor and the second line sensor is set for each type of the foreign matter F and for each sensitivity level.

In the above-described embodiment, on the article A, an example in which one optimal algorithm is set for the type of the foreign matter F and for each sensitivity level has been described, but two or more may be selected and be set as the image processing algorithms selected in advance.

In the above-described embodiment, as an example of the method of generating the synthesized transmission image P13, an example in which the acquisition unit 22 synthesizes the foreign-matter transmission image PF on the transmission image (conforming-article transmission image PA1) obtained by transmitting the electromagnetic waves through the article A has been described, but the embodiments are not limited thereto. For example, the processing in which pixel values of at least a part of the pixels constituting the conforming-article transmission image PA1 are changed based on a predetermined pixel value that is determined based on the absorption characteristics of the electromagnetic waves and the like may be performed. Such processing may be processed by a computer program.

In the above-described embodiment, the mode in which the inspection apparatus is the X-ray inspection apparatus 1 has been exemplified. According to the invention, the electromagnetic waves are x-rays; in alternative examples outside the scope of the claims, the electromagnetic waves can also be near-infrared rays, light, and other electromagnetic waves. The type of articles A is not particularly limited and various articles A can be a subject of the inspection. Similarly, the type of foreign matters is not particularly limited and various foreign matters can be a subject of the inspection.

## Claims

1. An inspection apparatus that is configured to perform image processing using an image processing algorithm selected in advance out of a plurality of image processing algorithms on a transmission image obtained by transmitting x-rays through an article, and is configured to inspect presence of a foreign matter contained in the article based on an image processing result, the inspection apparatus comprising:

   a storage unit configured to store the image processing algorithms,
   the image processing algorithms being algorithms for which a plurality of image processing filters are combined;
   an acquisition unit configured to acquire, as a reference transmission image,

   a transmission image (P11) obtained by transmitting x-rays through the article containing the foreign matter, or
   a synthesized transmission image (P13) generated by virtually synthesizing, on a conforming-article transmission image (PA1), a foreign-matter transmission image (PF, PF1) that is obtained by transmitting x-rays through the foreign matter,
   the conforming-article transmission image (PA1) being an ray transmission image of the article containing no foreign matter;

an evaluation unit configured to evaluate detection accuracy of the foreign matter for each of the image processing algorithms based on evaluation images obtained by processing the reference transmission image with the image processing algorithms stored in the storage unit; and

a setting unit configured to set at least one of the image processing algorithms as the image processing algorithm selected in advance based on evaluation in the evaluation unit.

2. The inspection apparatus according to claim 1, wherein

the acquisition unit is configured to acquire the synthesized transmission image as a reference transmission image, and

the synthesized transmission image is generated by synthesizing a transmission image obtained by transmitting x-rays through the foreign matter with at least a part of a transmission image obtained by transmitting x-rays through the article.

3. The inspection apparatus according to claim 1 or 2, wherein
the evaluation unit is configured to evaluate the detection accuracy based on a score calculated based on average brightness of a portion corresponding to the foreign matter of the evaluation image, minimum brightness of a portion corresponding to the foreign matter, and maximum brightness of a portion corresponding to the article other than the foreign matter.

4. The inspection apparatus according any one of claims 1 to 3, wherein
the evaluation unit is configured to evaluate the detection accuracy based on a score calculated based on a calculation formula in which the score is set to become higher as a portion corresponding to the foreign matter of the evaluation image becomes brighter and as a portion corresponding to the article other than the foreign matter becomes darker in a case where the evaluation image is obtained so as to be indicated darker as a transmission amount of the x-rays increases and indicated brighter as a transmission amount of the x-rays declines as a result of processing the reference transmission image with the image processing algorithm.

5. The inspection apparatus according to any one of claims 1 to 4, wherein

the acquisition unit is configured to generate, based on a transmission image acquired by transmitting x-rays through the foreign matter that is transported in a state in which it is mounted on a belt conveyor, the foreign-matter transmission image (PF, PF1) so as to be indicated darker as a transmission amount of x-rays increases and indicated brighter as a transmission amount of x-rays declines and for which a portion corresponding to the foreign matter and a portion corresponding to a background of a periphery of the foreign matter are extracted from the transmission image,

generate a virtual foreign matter image (PF2, PF3) for which brightness of a portion corresponding to the background is set to zero by subtracting a mode value of brightness in the foreign-matter transmission image from brightness of each pixel constituting the foreign-matter transmission image (PF, PF1), and

generate the synthesized transmission image (P13) by synthesizing the virtual foreign-matter image (PF2, PF3) with the conforming-article transmission image (PA1) obtained by transmitting x-rays through the article.

6. The inspection apparatus according to claim 5, wherein
the acquisition unit is configured to acquire

a first variation that is variation in brightness of a portion corresponding to the foreign matter with respect to a portion corresponding to the background in the foreign-matter transmission image (PF, PF1), and

a second variation that is variation in brightness of a portion corresponding to the foreign matter with respect to a portion corresponding to the article other than the foreign matter in the transmission image (P11) obtained by transmitting x-rays through the article containing
the foreign matter, and

the acquisition unit is configured to correct, based on the first variation and the second variation, brightness of respective pixels constituting the synthesized transmission image (P13),

wherein the acquisition unit is configured to correct the brightness of the synthesized transmission image (P13) based on the following formula:

(Brightness of the synthesized transmission image (P13))

= (Brightness of conforming-article transmission image (PA1))

- (Adjustment coefficient) * (Brightness variation in the transmission image (P11))

(Brightness variation in the transmission image (P11))

= (Brightness variation in the foreign matter image (PF1)) * (Brightness of the article) /

(Brightness of background).

**Patentansprüche**

1. Prüfvorrichtung, die konfiguriert ist, eine Bildverarbeitung unter Verwendung eines Bildverarbeitungsalgorithmus, der im Voraus aus mehreren Bildverarbeitungsalgorithmen ausgewählt wird, an einem Transmissionsbild durchzuführen, das durch Senden von Röntgenstrahlen durch einen Artikel erhalten wird, und konfiguriert ist, das Vorhandensein eines im Artikel enthaltenen Fremdkörpers basierend auf einem Bildverarbeitungsergebnis zu prüfen, wobei die Prüfvorrichtung aufweist:

   eine Speichereinheit, die konfiguriert ist, die Bildverarbeitungsalgorithmen zu speichern, wobei die Bildverarbeitungsalgorithmen Algorithmen sind, für die mehrere Bildverarbeitungsfilter kombiniert werden; eine Erfassungseinheit, die konfiguriert ist, als Referenz-Transmissionsbild zu erfassen:

   ein Transmissionsbild (P11), das durch Senden von Röntgenstrahlen durch den Artikel erhalten wird, der den Fremdkörper enthält, oder ein synthetisiertes Transmissionsbild (P13), das durch virtuelles Synthetisieren eines Fremdkörper-Transmissionsbildes (PF, PF1), das durch Senden von Röntgenstrahlen durch den Fremdkörper erhalten wird, auf einem Transmissionsbild (PA1) des konformen Artikels erzeugt wird, wobei das Transmissionsbild (PA1) des konformen Artikels ein Röntgentransmissionsbild des Artikels ist, der keine Fremdkörper enthält; eine Bewertungseinheit, die konfiguriert ist, die Erfassungsgenauigkeit des Fremdkörpers für jeden der Bildverarbeitungsalgorithmen basierend auf Bewertungsbildern zu bewerten, die durch Verarbeiten des Referenz-Transmissionsbildes mit den in der Speichereinheit gespeicherten Bildverarbeitungsalgorithmen erhalten werden; und eine Einstelleinheit, die konfiguriert ist, mindestens einen der Bildverarbeitungsalgorithmen als den im Voraus ausgewählten Bildverarbeitungsalgorithmus basierend auf der Bewertung in der Bewertungseinheit einzustellen.

2. Prüfvorrichtung nach Anspruch 1, wobei

   die Erfassungseinheit konfiguriert ist, das synthetisierte Transmissionsbild als ein Referenz-Transmissionsbild zu erfassen, und das synthetisierte Transmissionsbild durch Synthetisieren eines Transmissionsbildes, das durch Senden von Röntgenstrahlen durch den Fremdkörper erhalten wird, mit mindestens einem Teil eines Transmissionsbildes erzeugt wird, das durch Senden von Röntgenstrahlen durch den Artikel erhalten wird.

3. Prüfvorrichtung nach Anspruch 1 oder 2, wobei die Bewertungseinheit konfiguriert ist, die Erfassungsgenauigkeit basierend auf einer Punktzahl zu bewerten, die basierend auf der durchschnittlichen Helligkeit eines dem Fremdkörper entsprechenden Abschnitts des Bewertungsbildes, der minimalen Helligkeit eines dem Fremdkörper entsprechenden Abschnitts und der maximalen Helligkeit eines dem Artikel entsprechenden Abschnitts berechnet wird, der nicht der Fremdkörper ist.

4. Prüfvorrichtung nach einem der Ansprüche 1 bis 3, wobei die Bewertungseinheit konfiguriert ist, die Erfassungsgenauigkeit basierend auf einer Punktzahl zu bewerten, die basierend auf einer Berechnungsformel berechnet wird, in der die Punktzahl so eingestellt ist, dass sie höher wird, wenn ein dem Fremdkörper entsprechender Abschnitt des Bewertungsbildes heller wird und wenn ein dem Artikel, der nicht der Fremdkörper ist, entsprechender Abschnitt dunkler wird, wenn das Bewertungsbild so erhalten wird, dass es dunkler angezeigt wird, wenn eine Transmissionsmenge der Röntgenstrahlen zunimmt, und heller angezeigt wird, wenn eine Transmissionsmenge der Röntgenstrahlen als Ergebnis der Verarbeitung des Referenz-Transmissionsbildes mit dem Bildverarbeitungsalgorithmus abnimmt.

5.   Prüfvorrichtung nach einem der Ansprüche 1 bis 4, wobei die Erfassungseinheit konfiguriert ist:

basierend auf einem Transmissionsbild, das durch Senden von Röntgenstrahlen durch den Fremdkörper erfasst wird, der in einem Zustand transportiert wird, in dem er auf einem Bandförderer montiert ist, das Fremdkörper-Transmissionsbild (PF, PF1) zu erzeugen, so dass es dunkler angezeigt wird, wenn eine Transmissionsmenge von Röntgenstrahlen zunimmt, und heller angezeigt wird, wenn eine Transmissionsmenge von Röntgenstrahlen abnimmt, und

für das ein Abschnitt, der dem Fremdkörper entspricht, und ein Abschnitt, der einem Hintergrund eines Umfangs des Fremdkörpers entspricht, aus dem Transmissionsbild extrahiert werden,

ein virtuelles Fremdkörperbild (PF2, PF3) zu erzeugen, für das die Helligkeit eines dem Hintergrund entsprechenden Abschnitts auf null gesetzt wird, indem ein Moduswert der Helligkeit im Fremdkörper-Transmissionsbild von der Helligkeit jedes Pixels subtrahiert wird, das das Fremdkörper-Transmissionsbild (PF, PF1) bildet, und

das synthetisierte Transmissionsbild (P13) durch Synthetisieren des virtuellen Fremdkörperbildes (PF2, PF3) mit dem Transmissionsbild (PA1) des konformen Artikels zu erzeugen, das durch Senden von Röntgenstrahlen durch den Artikel erhalten wird.

6.   Prüfvorrichtung nach Anspruch 5, wobei die Erfassungseinheit konfiguriert ist, zu erfassen:

eine erste Variation, die eine Variation der Helligkeit eines dem Fremdkörper entsprechenden Abschnitts in Bezug auf einen dem Hintergrund entsprechenden Abschnitt im Fremdkörper-Transmissionsbild (PF, PF1) ist, und

eine zweite Variation, die eine Variation der Helligkeit eines dem Fremdkörper entsprechenden Abschnitts in Bezug auf einen Abschnitt, der dem Artikel entspricht, der nicht das Fremdmaterial ist, im Transmissionsbild (P11), das durch Senden von Röntgenstrahlen durch den Artikel, der das Fremdmaterial enthält, erhalten wird, und

die Erfassungseinheit konfiguriert ist, basierend auf der ersten Variation und der zweiten Variation, die Helligkeit der jeweiligen Pixel zu korrigieren, die das synthetisierte Transmissionsbild (P13) bilden,

wobei die Erfassungseinheit konfiguriert ist, die Helligkeit des synthetisierten Transmissionsbildes (P13) basierend auf der folgenden Formel zu korrigieren:

```
(Helligkeit des synthetisierten Transmissionsbildes (P13))

= (Helligkeit des Transmissionsbildes des konformen
Artikels (PA1))

- (Anpassungskoeffizient) * (Helligkeitsvariation im
Transmissionsbild (P11))

(Helligkeitsvariation im Transmissionsbild (P11))

= (Helligkeitsvariation im Fremdkörperbild (PF1)) *
(Helligkeit des Artikels) / (Helligkeit des Hintergrunds).
```

## Revendications

1.   Appareil d'inspection prévu pour effectuer un traitement d'image au moyen d'un algorithme de traitement d'image préalablement sélectionné parmi une pluralité d'algorithmes de traitement d'image sur une image de transmission obtenue par transmission de rayons X au travers d'un article, et prévu pour inspecter la présence d'une matière étrangère contenue dans l'article sur la base d'un résultat de traitement d'image, ledit appareil d'inspection comprenant :

une unité de mémorisation prévue pour stocker les algorithmes de traitement d'image, les algorithmes de traitement d'image étant des algorithmes pour lesquels une pluralité de filtres de traitement d'image sont combinés ;
une unité d'acquisition prévue pour acquérir, en tant qu'image de transmission de référence, une image de transmission (P11) obtenue par transmission de rayons X au travers de l'article contenant la matière étrangère, ou
une image de transmission synthétisée (P13) générée par synthèse virtuelle, sur une image de transmission d'article conforme (PA1), d'une image de transmission de matière étrangère (PF, PF1) obtenue par transmission de rayons X au travers de la matière étrangère,
l'image de transmission d'article conforme (PA1) étant une image de transmission radiologique de l'article ne contenant pas de matière étrangère ;
une unité d'évaluation prévue pour évaluer la précision de détection de la matière étrangère pour chacun des algorithmes de traitement d'image sur la base des images d'évaluation obtenues par traitement de l'image de transmission de référence avec les algorithmes de traitement d'image stockés dans l'unité de mémorisation ; et
une unité de réglage prévue pour définir au moins un des algorithmes de traitement d'image en tant qu'algorithme de traitement d'image préalablement sélectionné sur la base de l'évaluation dans l'unité d'évaluation.

2. Appareil d'inspection selon la revendication 1, où

l'unité d'acquisition est prévue pour acquérir l'image de transmission synthétisée en tant qu'image de transmission de référence, et
l'image de transmission synthétisée est générée par synthèse d'une image de transmission obtenue par transmission de rayons X au travers de la matière étrangère avec au moins une partie d'une image de transmission obtenue par transmission de rayons X au travers de l'article.

3. Appareil d'inspection selon la revendication 1 ou la revendication 2, où
l'unité d'évaluation est prévue pour évaluer la précision de détection sur la base d'un score calculé sur la base de la luminosité moyenne d'une partie correspondant à la matière étrangère de l'image d'évaluation, de la luminosité minimale d'une partie correspondant à la matière étrangère et de la luminosité maximale d'une partie correspondant à l'article autre que la matière étrangère.

4. Appareil d'inspection selon l'une des revendications 1 à 3, où

l'unité d'évaluation est prévue pour évaluer la précision de détection sur la base d'un score calculé à partir d'une formule de calcul où le score est défini de manière à s'élever à mesure qu'une partie correspondant à la matière étrangère de l'image d'évaluation devient plus claire et qu'une partie correspondant à l'article autre que la matière étrangère devient plus sombre, dans un cas où
l'image d'évaluation est obtenue de manière à être indiquée plus sombre à mesure de l'élévation d'une valeur de transmission des rayons X, et à être indiquée plus claire à mesure de la diminution d'une valeur de transmission des rayons X suite au traitement de l'image de transmission de référence au moyen de l'algorithme de traitement d'image.

5. Appareil d'inspection selon l'une des revendications 1 à 4, où

l'unité d'acquisition est prévue pour
générer, sur la base d'une image de transmission acquise par transmission de rayons X au travers de la matière étrangère transportée dans un état où elle est montée sur un convoyeur à bande, l'image de transmission de matière étrangère (PF, PF1) de sorte que celle-ci soit indiquée plus sombre à mesure de l'élévation d'une valeur de transmission des rayons X, et soit indiquée plus claire à mesure de la diminution d'une valeur de transmission de rayons X, et pour laquelle une partie correspondant à la matière étrangère et une partie correspondant à un arrière-plan d'une périphérie de la matière étrangère sont extraites de l'image de transmission,
générer une image virtuelle de la matière étrangère (PF2, PF3) pour laquelle la luminosité d'une partie correspondant à l'arrière-plan est réinitialisée en soustrayant une valeur de mode de la luminosité dans l'image de transmission de matière étrangère de la luminosité de chaque pixel constituant l'image de transmission de matière étrangère (PF, PF1), et

générer l'image de transmission synthétisée (P13) par synthèse de l'image virtuelle de la matière étrangère (PF2, PF3) avec l'image de transmission d'article conforme (PA1) obtenue par transmission de rayons X au travers de l'article.

**6.** Appareil d'inspection selon la revendication 5, où l'unité d'acquisition est prévue pour acquérir

une première variation, laquelle est une variation de luminosité d'une partie correspondant à la matière étrangère par rapport à une partie correspondant à l'arrière-plan dans l'image de transmission de matière étrangère (PF, PF1), et

une deuxième variation, laquelle est la variation de luminosité d'une partie correspondant à la matière étrangère par rapport à une partie correspondant à l'article autre que la matière étrangère dans l'image de transmission (P11) obtenue par transmission des rayons X au travers de l'article contenant la matière étrangère, et où l'unité d'acquisition est prévue pour corriger, sur la base de la première variation et de la deuxième variation, la luminosité des pixels respectifs constituant l'image de transmission synthétisée (P13),

l'unité d'acquisition est prévue pour corriger la luminosité de l'image de transmission synthétisée (P13) sur la base de la formule suivante :

```
(luminosité de l'image de transmission synthétisée (P13))
= (luminosité de l'image de transmission d'article conforme
(PA1))
- (coefficient d'ajustement) * (variation de la luminosité
de l'image de transmission (P11))

(variation de la luminosité de l'image de transmission
(P11))
= (variation de la luminosité de l'image de matière
étrangère (PF1)) * (luminosité de l'article) / (luminosité
d'arrière-plan).
```

*Fig.1*

EP 3 764 088 B1

Fig.2

Fig.3

1

20

CONTROLLER 21

STORAGE UNIT 22

ACQUISITION UNIT 23

IMAGE PROCESSOR 24

EVALUATION UNIT 25

SETTING UNIT 28

FOREIGN-MATTER DETERMINATION UNIT

5 TRANSPORT UNIT

6 X-RAY IRRADIATION UNIT

7 X-RAY DETECTOR

8 DISPLAY OPERATING UNIT

# Fig.4

X-RAY IRRADIATION    X-RAY IRRADIATION

PA1

PF

X-RAY IRRADIATION

SYNTHESIS

P1
(P11)

P1
(P13)

IMAGE
PROCESSING

IMAGE
PROCESSING

INSPECTION P2
RESULT
(INSPECTION)

EVALUATION P3
Score (P31)

EVALUATION P3
Score (P32)

. . .

EVALUATION P3
Score (P3n)

Fig.5A

PF0

F          F

Fig.5B

PF

F

Fig.5C

PF1

F

*Fig.6A*

F

PF2

*Fig.6B*

PF3

F

*Fig.7A*

~P12

*Fig.7B*

~P31

*Fig.7C*

~P32

**EP 3 764 088 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5635903 B
- US 20070019841 A1